## Europäisches Patentamt

## European Patent Office

## Office européen des brevets

(11) Publication number: **0 190 837**
**B1**

# EUROPEAN PATENT SPECIFICATION

(45) Date of publication of patent specification: **09.01.91**

(51) Int. Cl.⁵: **H 04 N 7/087**

(21) Application number: **86300343.0**

(22) Date of filing: **20.01.86**

(54) Teletext unit.

(30) Priority: **26.01.85 GB 8502001**

(43) Date of publication of application:
**13.08.86 Bulletin 86/33**

(45) Publication of the grant of the patent:
**09.01.91 Bulletin 91/02**

(84) Designated Contracting States:
**BE DE GB NL SE**

(56) References cited:
**GB-A-2 146 878**

**ELEKTRONIK, vol. 34, no. 12, June 1985, pages
163-168, Munich; U. WILDHAGEN "Teletext-
Multi-Page-System mit TPU 2700"**

(73) Proprietor: **FERGUSON LIMITED
Thorn Emi House Upper Saint Martin's Lane
London, WC2H 9ED (GB)**

(72) Inventor: **Crossland, Eric Richard
34, Springwood Avenue West Bowling
Bradford Yorkshire (GB)**
Inventor: **Davy, Steven Arthur
8, Manor Gardens Cullingworth
Bradford Yorkshire (GB)**
Inventor: **Franklin, Geoffrey Theodore
18, Larkhill Birstall
Batley Bradford West Yorkshire (GB)**
Inventor: **Harrison, Roger
8, Thackray Avenue
Heckmondwike West Yorkshire, WF16 NN (GB)**

(74) Representative: **Einsel, Robert, Dipl.-Ing.
Deutsche Thomson-Brandt GmbH Patent- und
Lizenzabteilung Göttinger Chaussee 76
D-3000 Hannover 91 (DE)**

## Description

The present invention relates to a unit for the processing of signals of teletext format which accompany a video signal.

In a teletext system, additional information for display is inserted into the vertical blanking period lines of normal video signals before broadcast, in order that pages of this additional information can be displayed on the television receiver upon specific request by a viewer. Once a particular page is requested, there is a delay before display can occur because it is necessary to wait until the required page is broadcast. This delay, normally called the "access time", is not constant as it depends on the timing of the request in relation to the transmission sequence of pages, but under the present operating conditions it can be up to 15 seconds, a period considered, by many users, to be unacceptably long.

In one attempt to improve the situation, there is provided sufficient storage capacity (for example by using a videotape recorder) to store all the teletext pages. Thus once all the pages are held in the store, any subsequent request for the display of a teletext page is satisfied by utilising the information for that respective page held in the videotape recorder; in this way the access time relates solely to the time required for extracting the page information from the recorder, there being no delays caused by waiting for the page to be broadcast. However, this arrangement requires very costly storage equipment of a capacity sufficient to hold all the teletext pages; moreover it suffers frcm severe difficulty in maintaining an updated record of all the teletext pages, bearing in mind that the information contained in some specific pages is revised or rewritten much more often than others.

In another attempt to improve the problem of slow access times, there is provided solid-state storage for a very limited number (for example four) teletext pages; accordingly, the user can choose which teletext pages are to have the fast-access facility and then set the teletext unit in order to store the information relating to those four pages alone. Clearly the user can consider any of a number of criteria in deciding which of the teletext pages are to have the fast-access facility; for example he may choose the fast-access pages by virtue of their "urgency" nature (for example if they contain emergency telephone numbers) or by their importance, or by their popularity.

An object of the present invention is to overcome disadvantages of the existing equipment, while providing a teletext unit with a fast-access facility of significant benefit to a user at modest cost.

The present invention provides a teletext unit having means to extract one or more selected pages of teletext data from a transmitted signal, means to monitor the frequency of selection of individual teletext pages, and means to store a number of pages of teletext data in accordance with the results of the monitoring means.

Also, the present invention provides a teletext unit having means to extract one or more selected pages of teletext data from a transmitted signal, means to monitor the frequency of selection of individual teletext pages, and means to store a number of individual teletext data pages being those, determined by the monitor means, to be the most frequently selected over a predetermined period.

In this way, the storage of teletext pages is regulated according to a priority list of the frequency of use, and this priority list is continually updated as selections are made.

Preferably the monitor means includes: means to note the identification code of a page upon its selection; means to hold a record of the number of selections appropriate to at least some of the teletext pages; and means to form a priority list of the teletext pages according to the information in the record-holding means.

The monitor means may record the frequency of use in relation to a single time reference common to all the teletext pages, for example the first use of the teletext unit. Additionally and/or alternatively, the monitor means may record the frequency of use of each teletext page in relation to a time reference appropriate to that particular page, for example the first selection of that page; thus the priority listing of stored pages may incorporate some weighting thereby to ensure storage of certain pages which had been used a lot in the recent past, although their overall use may be small compared to many pages. The teletext unit may have means to reset the starting position of any predetermined period for the monitoring means, whether this predetermined period relate to a single teletext page or a number of teletext pages having a predetermined period in common.

The teletext unit may have means to refresh the stored information in respect of one or more pages upon each selection, or after a specified time period, or a combination of each; additionally or alternatively, the teletext unit may have means to compare the teletext information stored in respect of one or more pages with the teletext information currently being transmitted in respect of the page(s), and means to refresh the teletext information for any page(s) whereby the comparison means indicates a difference exists.

When initially setting up the teletext unit for operation, the user can key in a provisional priority list for page storage; alternatively, no provisional priority list is provided and the unit builds up a priority list purely based upon selections made by the user.

The teletext unit may have a reserve power unit, independent of the unit being energised from the electrical mains, in order to ensure that at least the priority list (and preferably also the stored teletext information relating to the pages on that list) is maintained in storage within the unit, regardless of interruptions in the power supply to the unit.

The teletext unit may incorporate means to provide efficient storage of the pages of teletext information. For example the pages of information may be subjected, line by line, to a compression technique constituting the removal of information corresponding to spaces within, or at the ends of, a line of teletext display; also an abbreviation may be used when there occurs a sequence of identical characters, there being provision for indicating the nature of the repeated characters and the length of the sequence. Thus for example consider a standard teletext line which, as received by the unit, consists of 40 bytes of information to be displayed on the screen as characters, some of which will be blank; after compression, the line consists of one byte to indicate that compression has occurred, two bits to indicate the types of packing to be found in the line (e.g. packed/unpacked, spaces, compressed multi-characters) and six bits to indicate the length of the packed line less any end-of-line spaces. Clearly a standard line with 40 spaces is compressed to a single null byte which indicates no teletext characters for display.

The monitor means may comprise hardware with 64K of DRAM with 16K of EPROM which normally masks out the same area of RAM. By mapping this masked area, the full 64K is available for use thereby ensuring an increase in the storage capacity of the teletext unit.

In order that the invention may more readily be understood, a description is now given by way of example only, reference being made to the accompanying drawings, in which:

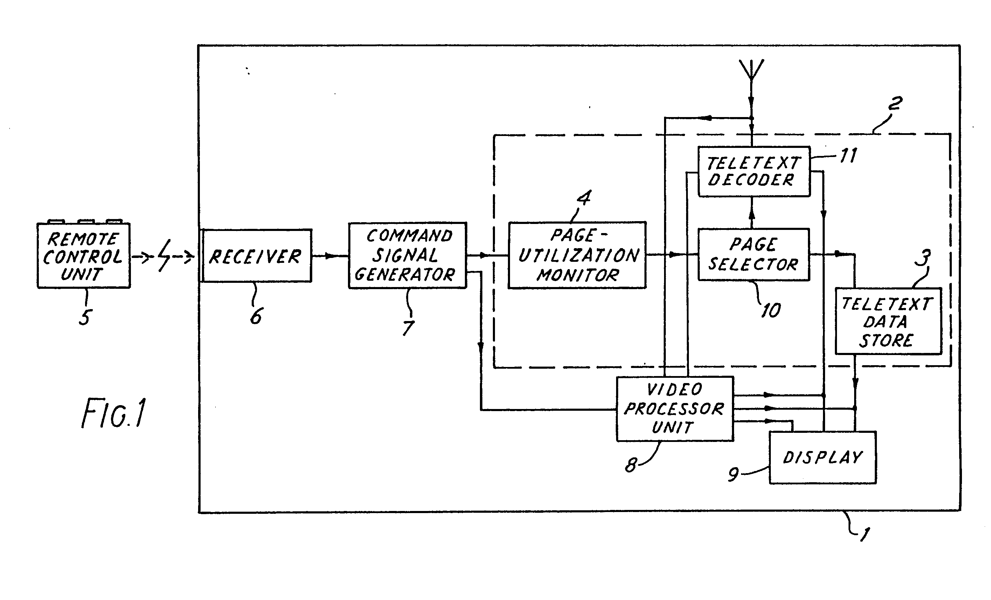

Figure 1 is a block diagram of a television receiver incorporating a teletext unit embodying the present invention;

Figure 2 is a flow diagram of a sequence of operations relating to one mode of the receiver shown in Figure 1;

Figure 3 is a block diagram of the television receiver of Figure 1 when in another mode; and

Figure 4 is a flow diagram of a sequence of operations when the receiver is in the other mode.

In the illustrated embodiment of the invention, a television receiver 1 incorporates a teletext unit 2 with a solid state memory store 3 of sufficient capacity to hold 55 pages of teletext information, these pages chosen according to the frequency of use noted by a page-utilization monitor.

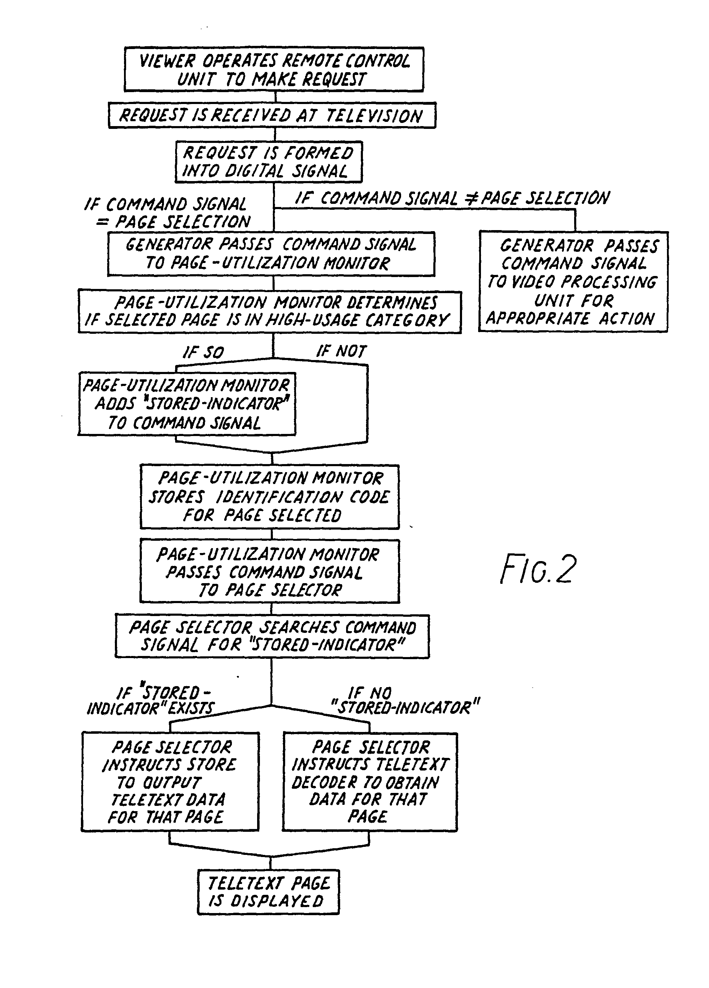

Considering now the television receiver 1 in greater detail, it has a remote control unit 5 to enable a user to key in requests for any change in the video display (e.g. volume or channel) or for use of the teletext facilities. Any signals from remote control unit 5 picked up by an infra-red receiver 6 are passed to a command signal generator 7 which arranges them into a suitable format and then directs them to a video processing unit 8 and onto display 9 or to page-utilization monitor 4, whichever is appropriate. Figure 2 shows in detail the operations performed by television receiver 1 on any request signal originating from remote control unit 5. Of particular interest are the processing operations done on any teletext-related signals by monitor 4, a page selector 10, a teletext decoder 11 and store 3;

these processing operations ensure that a priority list of the most frequently-used pages is set up and maintained, and that the teletext information for these priority pages in the high-usage category are held in store 3 for fast and ready access.

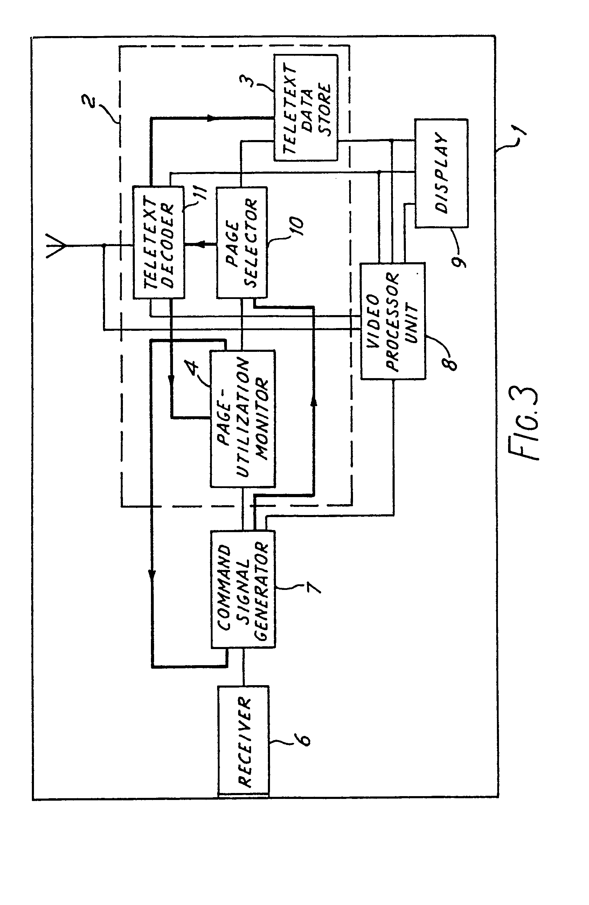

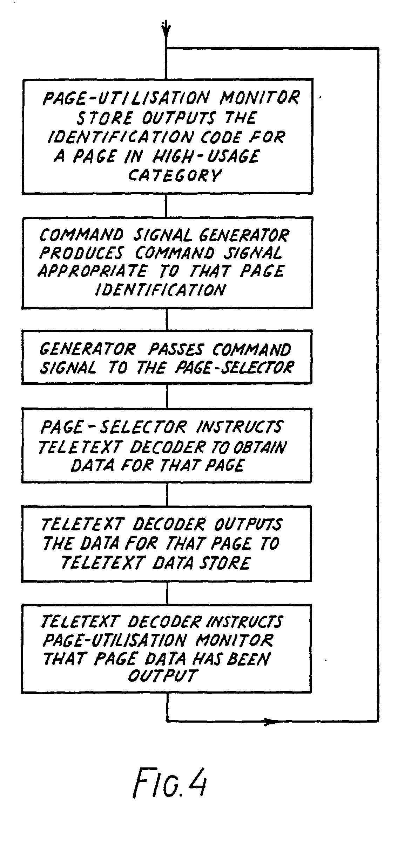

Figure 3 is a block diagram of the components of television receiver 1 with the arrowed thick lines indicating the connections required for refreshing the contents of store 3 to ensure it holds the current teletext information for the current priority list of pages. Figure 4 shows the sequence of operations performed in a single cycle of this refresh method.

Monitor 4 includes a detector to note the identification code of a page upon its selection, so that it can then compare that code with a record, in its store, of the frequency of use of all the pages. If the selected page belongs to the high-usage category, monitor 4 arranges for the relevent teletext data to be read-cut from store 3; otherwise decoder 11 is suitably instructed. Clearly, monitor 4 also adjusts its record of page-usage to take account of the selection.

The compilation of the high-usage category incorporates some degree of weighting thereby to ensure storage of pages which have been used frequently in the recent past, even though their overall use may not have been exceptionally high; thus the frequency of use of a page is calculated from the first selection of that page, rather than from a starting-point common to all pages.

When initially setting up the teletext unit for operation, the user keys in (via remote control unit 5) a provisional priority list for page storage which is held in the store of monitor 4 as the initial list of high-usage category pages; alternatively, no provisional priority list is provided and the unit builds up a priority list purely based upon selections made by the user.

Monitor 4 has a reserve power unit, independent of the unit being energised from the electrical mains, in order to ensure that at least the priority list (and preferably also the stored teletext information relating to the pages on that list) is maintained in storage within the unit, regardless of interruptions in the power supply to the unit.

Decoder 11 has a signal processor to arrange the teletext data so as to ensure efficient storage in store 3. Thus teletext pages intended for storage are subjected, line by line, to a compression technique whereby information corresponding to spaces within, or at the ends of, a teletext line is removed; also abbreviations are used when a sequence of identical characters occurs, there being provision for indicating the nature of the repeated characters and the length of the sequence. Thus for example consider a standard teletext line which, as received by the unit 2, consists of 40 bytes of information to be displayed on the screen 9 as characters, some of which will be blank; after compression, the line consists of one byte to indicate that compression has occurred, two bits to indicate the types of packing to be found in the line (e.g. packed/

unpacked, spaces, compressed multi-characters) and six bits to indicate the length of the packed line less any end-of-line spaces. Clearly a standard line with 40 spaces is compressed to a single null byte which indicates no teletext characters for display.

Monitor 4 has 64K of DRAM and 16K of EPROM which normally masks out the same area of RAM. By mapping this masked area, the full 64K is available for use thereby ensuring an increase in the storage capacity of the teletext unit.

**Claims**

1. A teletext unit comprising means (11) to extract one or more selected pages of teletext data from a transmitted signal, means (4) to monitor the frequency of selection of individual teletext pages, and means (3) to store a number of pages of teletext data in accordance with the results of the monitoring means (4).

2. A teletext unit according to Claim 1, comprising means (3) to store a number of individual teletext data pages being those, determined by the monitor means, to be the most frequently selected over a predetermined period.

3. A teletext unit according to Claim 1 or Claim 2, wherein the monitor means including: means (4) to note the identification code of a page upon its selection; means (4) to hold a record of the number of selections appropriate to at least some of the teletext pages; and means (4) to form a priority list of the teletext pages according to the information in the record-holding means.

4. A teletext unit according to any one of the preceding claims wherein the monitor means (4) recording the frequency of use of each teletext page in relation to the first selection of that page.

5. A teletext unit according to any one of the preceding claims, comprising means to subject the pages of information, line by line, to a compression technique constituting the removal of information corresponding to spaces within, or at the ends of, a line of teletext display, and/or to abbreviation when there occurs a sequence of identical characters, there being provision for indicating the nature of the repeated characters and the length of the sequence.

6. A television receiver comprising a teletext unit according to any one of Claims 1 to 5.

**Patentansprüche**

1. Videotext-Einheit mit Mitteln (11) zum Extrahieren einer oder mehrerer ausgewählter Tafeln von Videotextdaten aus einem übertragenen Signal, Mitteln (4) zum Überwachen der Häufigkeit der Auswahl einzelner Videotexttafeln und Mitteln (3) zum Speichern einer Anzahl von Tafeln von Videotextdaten entsprechend den Ergebnissen der Überwachungsmittel (4).

2. Videotext-Einheit gemäß Anspruch 1 mit Mitteln (3) zum Speichern einer Anzahl von einzelnen Videotexttafeln und zwar derjenigen, welche nach der Feststellung der Überwachungsmittel über einen vorgegebenen Zeitraum am häufigsten gewählt wurden.

3. Videotext-Einheit gemäß Anspruch 1 oder Anspruch 2, wobei die Überwachungsmittel folgendes beinhalten: Mittel (4) zur Erkennung des Identifikationskodes einer Tafel bei ihrer Anwahl; Mittel (4) zum Führen einer Aufzeichnung der Anzahl der Anwahlen passend für zumindest einige der Videotexttafeln; und Mittel (4) zum Erstellen einer Prioritätsliste der Videotexttafeln entsprechend den Informationen in den die Aufzeichnung führenden Mitteln.

4. Videotext-Einheit gemäß irgendeinem der vorstehenden Ansprüche wobei die Überwachungsmittel (4) die Häufigkeit der Benutzung einer jeden Videotexttafel in Beziehung zur erstmaligen Anwahl dieser Tafel aufzeichnen.

5. Videotext-Einheit gemäß irgendeinem der vorstehenden Ansprüche mit Mitteln, die geeignet sind, die Informationstafeln Zeile für Zeile einer Kompressionstechnik zu unterziehen, bestehend in der Entfernung von Informationen betreffend Leerstellen innerhalb oder an den Enden einer dargestellten Videotextzeile und/oder Abkürzungen, wo eine Folge identischer Zeichen auftritt, wobei die Darstellung der Art der wiederholten Zeichen und der Länge der Folge vorgesehen ist.

6. Fernsehempfänger mit einer Videotext-Einheit gemäß irgendeinem der Ansprüche 1 bis 5.

**Revendications**

1. Unité de télétexte comprenant des moyens (11) pour extraire d'un signal transmis une page sélectionnée ou plus de données de télétexte, des moyens (4) pour contrôler la fréquence de sélection des pages individuelles de télétexte et des moyens (3) pour mémoriser un certain nombre de pages de données de télétexte conformément aux résultats des moyens de monitorage (4).

2. Unité de télétexte selon la revendication 1 comprenant des moyens (3) pour mémoriser un cetain nombre de pages individuelles de données de télétexte qui sont celles qui, déterminées par les moyens de monitorage, sont les plus fréquemment sélectionnées pendant une période prédéterminée.

3. Unité de télétexte selon la revendication 1 ou 2, dans laquelle les moyens de monitorage comprennent des moyens (4) pour noter le code d'identification d'une page après sa sélection, des moyens (4) pour maintenir un relevé du nombre des sélections approprié à au moins quelques-unes des pages de télétexte et des moyens (4) pour former une liste de priorité des pages de télétexte conformément aux informations des moyens qui gardent le relevé.

4. Unité de télétexte conformément à l'une des revendications précédentes dans laquelle les moyens de monitorage (4) enregistrent la fréquence d'utilisation de chaque page de télétexte par rapport à la première sélection de cette page.

5. Unité de télétexte conformément à l'une des revendications précédentes, comprenant des moyens pour soumettre les pages d'information, ligne par ligne, à une technique de compression qui constitue l'élimination des informations correspondant aux espaces à l'intérieur ou aux extrémités d'une ligne de visualisation de télétexte et/ou à l'abréviation lorsqu'il y a une séquence de caractères identiques, ceci étant une précaution pour indiquer la nature des caractères répétés et la longueur de la séquence.

6. Récepteur de télévision comprenant une unité de télétexte conformément à l'une des revendications 1 à 5.

FIG.1

REMOTE CONTROL UNIT

5

RECEIVER

6

COMMAND SIGNAL GENERATOR

7

PAGE- UTILIZATION MONITOR

4

TELETEXT DECODER

11

PAGE SELECTOR

10

TELETEXT DATA STORE

3

VIDEO PROCESSOR UNIT

8

DISPLAY

9

2

1

EP 0 190 837 B1

VIEWER OPERATES REMOTE CONTROL
UNIT TO MAKE REQUEST

REQUEST IS RECEIVED AT TELEVISION

REQUEST IS FORMED
INTO DIGITAL SIGNAL

IF COMMAND SIGNAL
= PAGE SELECTION

IF COMMAND SIGNAL ≠ PAGE SELECTION

GENERATOR PASSES COMMAND SIGNAL
TO PAGE-UTILIZATION MONITOR

GENERATOR PASSES
COMMAND SIGNAL
TO VIDEO PROCESSING
UNIT FOR
APPROPRIATE ACTION

PAGE-UTILIZATION MONITOR DETERMINES
IF SELECTED PAGE IS IN HIGH-USAGE CATEGORY

IF SO          IF NOT

PAGE-UTILIZATION MONITOR
ADDS "STORED-INDICATOR"
TO COMMAND SIGNAL

PAGE-UTILIZATION MONITOR
STORES IDENTIFICATION CODE
FOR PAGE SELECTED

PAGE-UTILIZATION MONITOR
PASSES COMMAND SIGNAL
TO PAGE SELECTOR

FIG.2

PAGE SELECTOR SEARCHES COMMAND
SIGNAL FOR "STORED-INDICATOR"

IF "STORED-
INDICATOR" EXISTS

IF NO
"STORED-INDICATOR"

PAGE SELECTOR
INSTRUCTS STORE
TO OUTPUT
TELETEXT DATA
FOR THAT PAGE

PAGE SELECTOR
INSTRUCTS TELETEXT
DECODER TO OBTAIN
DATA FOR THAT
PAGE

TELETEXT PAGE
IS DISPLAYED

Fig.3

```
                          ↓

        ┌──────────────────────────────┐ ┐
        │  PAGE-UTILISATION MONITOR     │
        │     STORE OUTPUTS THE         │
        │  IDENTIFICATION CODE FOR      │
        │   A PAGE IN HIGH-USAGE        │
        │       CATEGORY                │
        └──────────────────────────────┘

        ┌──────────────────────────────┐
        │  COMMAND SIGNAL GENERATOR     │
        │  PRODUCES COMMAND SIGNAL      │
        │  APPROPRIATE TO THAT PAGE     │
        │     IDENTIFICATION            │
        └──────────────────────────────┘

        ┌──────────────────────────────┐
        │  GENERATOR PASSES COMMAND     │
        │  SIGNAL TO THE PAGE-SELECTOR  │
        └──────────────────────────────┘

        ┌──────────────────────────────┐
        │  PAGE-SELECTOR INSTRUCTS      │
        │  TELETEXT DECODER TO OBTAIN   │
        │     DATA FOR THAT PAGE        │
        └──────────────────────────────┘

        ┌──────────────────────────────┐
        │  TELETEXT DECODER OUTPUTS     │
        │  THE DATA FOR THAT PAGE TO    │
        │    TELETEXT DATA STORE        │
        └──────────────────────────────┘

        ┌──────────────────────────────┐
        │  TELETEXT DECODER INSTRUCTS   │
        │  PAGE-UTILISATION MONITOR     │
        │  THAT PAGE DATA HAS BEEN      │
        │       OUTPUT                  │
        └──────────────────────────────┘
                          →
```

FIG.4